# EUROPÄISCHE PATENTANMELDUNG

(11) **EP 3 042 796 A1**
(43) Veröffentlichungstag der Anmeldung: **13.07.2016**
(21) Anmeldenummer: 15197577.8
(22) Anmeldetag: 02.12.2015
(51) Int. Cl.: B60H 1/24, F16K 15/14

(54) **ENTLÜFTUNGSVORRICHTUNG**

(30) Priorität: 07.01.2015 DE 102015100103
(71) Anmelder: TRW Automotive Electronics & Components GmbH, 78315 Radolfzell (DE)
(72) Erfinder: Fiebiger, Markus, 67259 Großniedesheim (DE); Lang, Eric, 57370 Berling (FR); Senn, Andreas, 67680 Neuhemsbach (DE)
(74) Vertreter: Prinz & Partner mbB

(57) **Zusammenfassung**

Eine Entlüftungsvorrichtung (12) für ein Fahrzeug hat einen Rahmen (10) aus einem harten Kunststoff, der in einer Öffnung des Fahrzeugs fixiert werden kann, wobei der Rahmen (10) Aussparungen aufweist, und ein Rückschlagklappenelement (30) aus einem flexiblen Material, insbesondere einem Kunststoff, wobei sich das Rückschlagklappenelement (30) im Wesentlichen über den gesamten Rahmen (10) erstreckt und im Bereich der Aussparungen einstückig mit dem Rückschlagklappenelement (30) ausgebildete Ausschnitte (40) aufweist, die in einer geschlossenen Position flächig an um die Aussparungen umlaufenden Auflageflächen (36) anliegen und in einer geöffneten Position von den Auflageflächen (36) weg bewegt werden können.

## Beschreibung

Die Erfindung betrifft eine Entlüftungsvorrichtung für ein Fahrzeug.

Entlüftungsvorrichtungen für Fahrzeuge werden verwendet, um einen Überdruck in der Fahrgastzelle zu verhindern oder diesen abzubauen. Die Entlüftungsvorrichtungen weisen einen Rahmen aus einem harten Material, beispielsweise Kunststoff, auf, der in einer Öffnung des Fahrzeugs fixiert werden kann. Der Rahmen weist zumindest eine Aussparung auf, die mit einer Rückschlagklappe geschlossen werden kann. Bei einem Überdruck in der Fahrgastzelle, beispielsweise durch das Zuschlagen einer Fahrzeugtür, der Benutzung des Lüftungssystems oder einer Gassackauslösung, öffnet sich die Rückschlagklappe aufgrund des Überdruckes im Fahrzeuginnenraum, sodass der Überdruck aus der Fahrgastzelle entweichen kann. In entgegengesetzter Richtung liegt die Rückschlagklappe am Rahmen an und dichtet die Öffnung im Fahrzeug ab, sodass ein Eindringen von Feuchtigkeit, Abgasen oder Schmutz in den Fahrzeuginnenraum verhindert ist.

Üblicherweise werden derartige Lüftungsvorrichtungen aus zwei Komponenten hergestellt. Der Rahmen wird aus einer härteren Materialkomponente hergestellt. Die Rückschlagklappe bzw. ein Rückschlagklappenelement wird aus einem weichen Material hergestellt, sodass die Rückschlagklappen flexibel bei einem Überdruck im Fahrgastinnenraum nachgeben können.

Die Befestigung des Rückschlagklappenelements erfolgt entweder, indem das Rückschlagklappenelement und der Rahmen in einem Zweikomponentenspritzverfahren hergestellt werden oder indem das Rückschlagklappenelement nachträglich am Rahmen fixiert wird, beispielsweise über eine form- oder stoffschlüssige Verbindung. Beide Herstellungsmethoden sind sehr aufwändig. Bekannt ist, an jeder Aussparung des Rahmens eine separate Rückschlagklappe anzuordnen, wodurch aber der Montageaufwand einer solchen Entlüftungsvorrichtung weiter ansteigt.

Aufgabe der Erfindung ist es, eine Entlüftungsvorrichtung für ein Fahrzeug bereitzustellen, die einen geringeren Montageaufwand aufweist und eine zuverlässige Abdichtung der Öffnung im Fahrzeug ermöglicht.

Zur Lösung der Aufgabe ist eine Entlüftungsvorrichtung für ein Fahrzeug vorgesehen, mit einem Rahmen aus einem harten Kunststoff, der in einer Öffnung des Fahrzeugs fixiert werden kann, wobei der Rahmen Aussparungen aufweist, und mit einem Rückschlagklappenelement aus einem flexiblen Material, insbesondere aus Kunststoff. Das Rückschlagklappenelement erstreckt sich im Wesentlichen über den gesamten Rahmen und weist im Bereich der Aussparungen einstückig mit dem Rückschlagklappenelement ausgebildete Ausschnitte auf, die in einer geschlossenen Position flächig an um die Aussparung umlaufenden Auflageflächen anliegen und in einer geöffneten Position von den Auflageflächen wegbewegt werden können. Erfindungsgemäß sind nicht einzelne Rückschlagklappen für jede Aussparung vorgesehen, sondern es wird ein flächiges Element aus einem flexiblen Material verwendet, in dem die Rückschlagklappen, also die Ausschnitte, vorgesehen sind. Dieses Element wird flächig auf die gesamte Oberfläche des Rahmens aufgelegt und von diesem abgestützt. Aufgrund der großen Kontaktfläche ist eine sehr flexible Verbindung des Rahmens mit dem Rückschlagklappenelement möglich. Durch die Fixierung eines Elementes, nämlich des Rückschlagklappenelementes, ist so die Montage mehrerer Rückschlagklappen, die mehrere Aussparungen abdichten können, in einem Schritt möglich. Der Herstellungsaufwand der erfindungsgemäßen Entlüftungsvorrichtung ist somit deutlich reduziert.

Um das Rückschlagklappenelement möglichst einfach am Rahmen zu fixieren, ist am Rückschlagklappenelement vorzugsweise ein umlaufender, im Wesentlichen senkrecht von der Ebene des Rückschlagklappenelements in Richtung zum Rahmen vorstehender Halterand vorgesehen, der den Rahmen in Umfangsrichtung vollständig umgreift. Zur Montage des Rückschlagklappenelements wird der umlaufende Halterand in Umfangsrichtung um den Rahmen herumgelegt, das Rückschlagklappenelement also gewissermaßen über den Rahmen übergezogen. Der Halterand ist so ausgebildet, dass dieser das Rückschlagklappenelement am Rahmen umlaufend klemmt, sodass ein zuverlässiger Halt des Rückschlagklappenelements am Rahmen gewährleistet ist. Die Montage dieses Rückschlagklappenelements am Rahmen kann so vorzugsweise ohne Werkzeug erfolgen.

Um den Halt des Rückschlagklappenelements am Rahmen zu verbessern, können am Halterand Rastelemente und/oder eine Rastlippe vorgesehen sein, die am Rahmen angreifen. Die Rastlippe ist beispielsweise durch einen zumindest abschnittsweise umlaufenden, radial nach innen gerichteten Rand gebildet, der an einem entsprechenden Element am Rahmen angreifen kann.

Um die Verrastung des Halterandes am Rahmen zu verbessern, ist am Rahmen beispielsweise ein in Richtung der Ebene des Rahmens bzw. des Rückschlagklappenelements vorstehender, insbesondere umlaufender, Steg vorgesehen, an dem der Halterand des Rückschlagklappenelements angreift. Der Steg steht vorzugsweise ringförmig vom Rahmen ab, sodass eine am Halterand vorgesehene, radial nach innen gerichtete Rastlippe an diesem angreifen kann. Dies ermöglicht eine einfache, werkzeuglose Montage des Rückschlagklappenelements am Rahmen.

Neben der Abdichtung der Aussparungen im Rahmen ist die Abdichtung der gesamten Entlüftungsvorrichtung in der Öffnung des Fahrzeugs ebenso wichtig. Üblicherweise werden dazu am Rahmen vorgesehene Dichtungen verwendet, die an der Öffnung des Fahrzeugs anliegen und den Rahmen gegenüber dem Fahrzeug abdichten. Die Anbringung der Dichtungen am Rahmen ist aber sehr aufwendig und muss beispielsweise in einem Zweikomponentenspritzverfahren erfolgen. Alternativ ist es möglich, dass Dichtschäume verwendet werden, wodurch aber ein zusätzlicher Arbeitsschritt erforderlich ist und eine nachträgliche Demontage der Entlüftungsvorrichtung erschwert wird. Um die Abdichtung der Entlüftungsvorrichtung gegenüber der Öffnung des Fahrzeugs zu vereinfachen, ist am Rückschlagklappenelement eine, insbesondere umlaufende, Dichtung vorgesehen, die am Fahrzeug anliegen kann. Das Rückschlagklappenelement besteht aus einem flexiblen Material, das ebenso als Dichtungsmaterial verwendet werden kann. Somit können sowohl der Rahmen wie auch das Rückschlagklappenelement in einem Einkomponentenspritzgussverfahren hergestellt werden, sodass aufwendige Zweikomponentenspritzverfahren vermieden werden können.

Um die Anlage der Ausschnitte, also der Rückschlagklappen, an den Auflageflächen des Rahmens zu verbessern, sind die Auflageflächen in einem von Null verschiedenen Winkel zur Ebene des Rahmens bzw. des Rückschlagklappenelements angeordnet. Wird das Rückschlagklappenelement flächig auf den Rahmen aufgelegt und an diesem fixiert, werden die Ausschnitte aus der Ebene des Rückschlagklappenelementes herausgedrückt, sodass diese federnd gegen die Auflageflächen gedrückt werden. Somit ist bereits im montierten Zustand eine Vorspannung vorhanden, durch die die Ausschnitte gegen die Auflageflächen gedrückt werden.

Um das Rückschlagklappenelement vor allem bei großen Entlüftungsvorrichtungen besser am Rahmen fixieren zu können, sind vorzugsweise am Rahmen und am Rückschlagklappenelement vom Halterand beabstandete, zusammenwirkende Rastelemente vorgesehen. Durch diese ist auch in der Mitte der Entlüftungsvorrichtung eine Fixierung des Rückschlagklappenelements am Rahmen möglich, sodass sich dieses nicht vom Rahmen abheben kann. Durch die Verwendung von Rastelementen kann das Rückschlagklappenelement auch in dieser Ausführungsform werkzeugfrei montiert werden.

Eine störungsfreie Funktion der Entlüftungsvorrichtung ist nur möglich, wenn das Rückschlagklappenelement so auf dem Rahmen montiert ist, dass sich die Ausschnitte an die Auflageflächen am Rahmen anlegen können. Insbesondere bei runden Entlüftungsvorrichtungen ist also auf die korrekte Orientierung des Rückschlagklappenelements am Rahmen zu achten. Um die korrekte Montage zu vereinfachen, sind daher vorzugsweise am Rahmen und am Rückschlagklappenelement zusammenwirkende Verdrehsicherungen vorgesehen. Diese stellen zum einen sicher, dass sich das Rückschlagklappenelement während des Fahrzeugbetriebs nicht relativ zum Rahmen verdrehen kann. Zum anderen dienen diese aber auch als Zentrier- bzw. Montagehilfe, sodass das Rückschlagklappenelement ausschließlich in der korrekten Orientierung am Rahmen montiert werden kann.

Die Ausschnitte können beispielsweise aus dem Rückschlagklappenelement ausgestanzt oder ausgeschnitten werden, wodurch eine einfache Herstellung der Ausschnitte möglich ist. Insbesondere sind die Schnitte vorzugsweise U-förmig ausgebildet, sodass sich ein rechteckiger Ausschnitt ergibt, der sich um einen Rand aus der Ebene des Rückschlagklappenelements heraus bewegen kann. Die Form der Ausschnitte kann aber beliebig an die Aussparungen im Rahmen angepasst werden, solange die Ausschnitte mit einer Kante am übrigen Rückschlagklappenelement gehalten sind.

Auf der dem Rahmen abgewandten Seite des Rückschlagklappenelements ist vorzugsweise ein zumindest abschnittsweise umlaufender Wasserabweiser vorgesehen.

Weitere Vorteile und Merkmale ergeben sich aus der nachfolgenden Beschreibung in Verbindung mit den beigefügten Zeichnungen. In diesen zeigen:
- die Figuren 1a bis 1c verschiedene Ansichten des Rahmens einer erfindungsgemäßen Entlüftungsvorrichtung,
- die Figuren 2a bis 2d verschiedene Ansichten des Rückschlagklappenelements einer erfindungsgemäßen Entlüftungsvorrichtung,
- die Figuren 3a bis 3c verschiedene Ansichten einer erfindungsgemäßen Entlüftungsvorrichtung mit einem Rahmen aus den Figuren 1a bis c und einem Rückschlagklappenelement aus den Figuren 2a bis 2d,
- Figur 4 eine Detailansicht einer in einem Fahrzeug montierten Entlüftungsvorrichtung aus den Figuren 3a bis 3c.

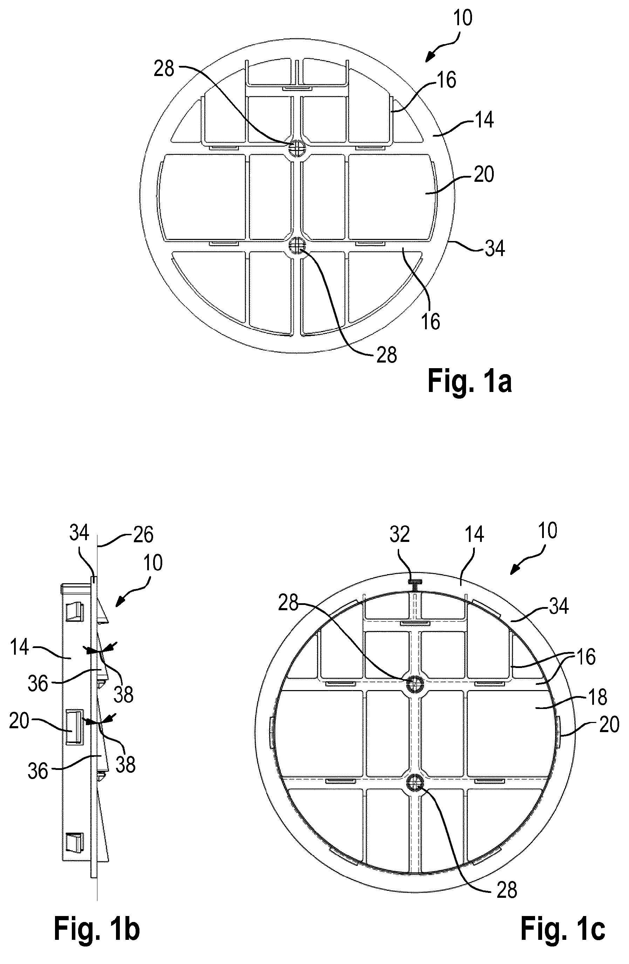

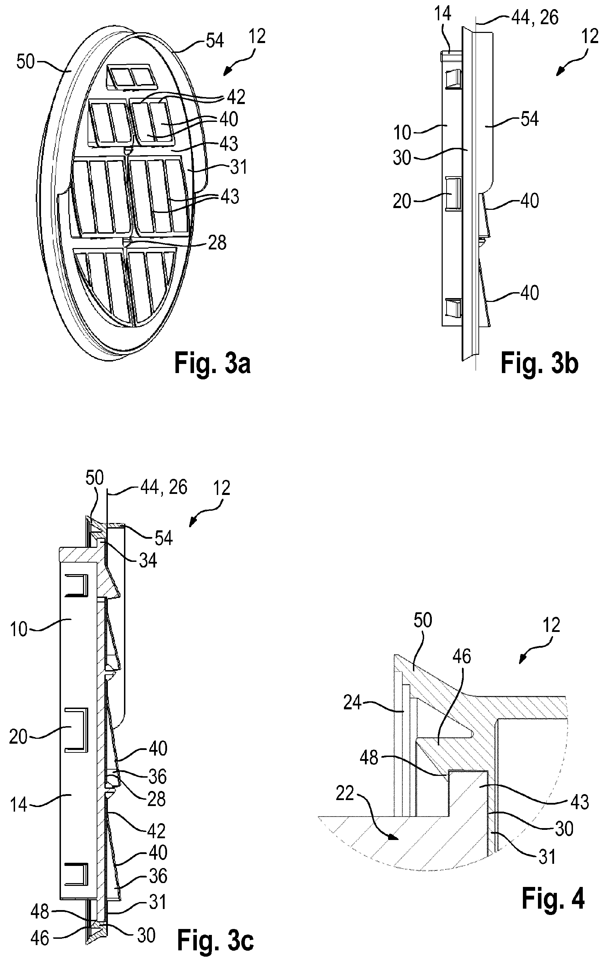

In den Figuren 1a bis 1c ist ein Rahmen 10 für eine in den Figuren 3a bis 3c gezeigte Entlüftungsvorrichtung 12 gezeigt. Der Rahmen 10 hat einen ringförmigen Grundkörper 14, der mehrere Stege 16 sowie mehrere zwischen den Stegen 16 angeordnete Aussparungen 18 aufweist.

Wie in Figur 1b zu sehen ist, sind auf der radialen Außenseite des Grundkörpers 14 Rastelemente 20 vorgesehen, mit welchen der Rahmen 10 in einer Öffnung 22 eines Fahrzeugs 24 fixiert werden kann (siehe Figur 4).

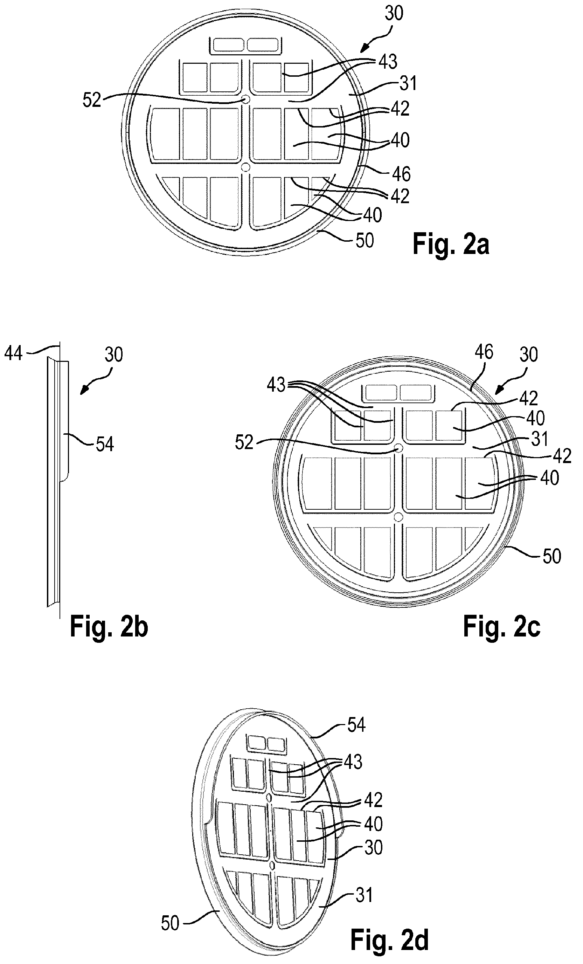

Am Rahmen 10 sind des Weiteren zwei aus der Ebene 26 des Rahmens 10 (siehe Figur 1 b) senkrecht vorstehende Rastelemente 28 vorgesehen, an welchen, wie nachfolgend erläutert wird, ein Rückschlagklappenelement 30 (siehe Figuren 2a bis 2d) fixiert werden kann. Am Rahmen sind zudem eine im Wesentlichen T-förmige Aussparung 32, die eine Verdrehsicherung bildet, sowie ein in radialer Richtung vorstehender, umlaufender Steg 34 vorgesehen.

Die Aussparungen 18 werden, wie in Figur 1b zu sehen ist, jeweils von einer umlaufenden Auflagefläche 36 begrenzt, welche in einem von Null verschiedenen Winkel 38 zur Ebene 26 angeordnet sind. Dieser Winkel beträgt zwischen 5° und 30°.

Der Rahmen 10 besteht aus einer harten Kunststoffkomponente. "Hart" bedeutet, dass der Rahmen eine Eigensteifigkeit aufweist, die bei den im Betrieb üblicherweise auftretenden Belastungen nicht zu einer Verformung führt.

In den Figuren 2a bis 2d ist ein Rückschlagklappenelement 30 gezeigt, das auf den Rahmen 10 aufgelegt und an diesem fixiert werden kann. Das Rückschlagklappenelement 30 besteht aus einem flexiblen Material, insbesondere aus einem elastisch verformbaren Kunststoff.

Am Rückschlagklappenelement 30 sind mehrere im Wesentlichen rechteckige Ausschnitte 40 vorgesehen, die jeweils über einen Rand 42 einstückig mit dem Rückschlagklappenelement verbunden sind. Insbesondere sind die Ausschnitte durch einen U-förmigen Schnitt bzw. durch ein U-förmiges Ausstanzen aus dem Rückschlagklappenelement 30 gebildet. Die Ausschnitte 40 können also jeweils um den Rand 42 aus der Ebene des Rückschlagklappenelements heraus bewegt werden. Zwischen den Ausschnitten 40 sind Stege 43 vorgesehen.

Das Rückschlagklappenelement 30 hat einen im Wesentlichen ebenen Grundkörper 31, der im Wesentlichen die Form des Rahmens 10 hat. Die Stege 43 sind so ausgebildet, dass diese auf den Stegen 16 des Rahmens 10 aufliegen können. Die Ausschnitte 40 sind jeweils über einer Aussparung 18 angeordnet und liegen umlaufend an den Auflageflächen 36 der Aussparungen 18 an, wobei die Ränder 42 und die Stege 43 im Wesentlichen in der Ebene 26 des Rahmens 10 liegen.

Das Rückschlagklappenelement 30 weist des Weiteren einen ringförmig ausgebildeten, senkrecht von der Ebene 44 des Rückschlagklappenelements 30 in Richtung zum Rahmen 10 vorstehenden Halterand 46 auf. Auf der radialen Innenseite des Halterandes 46 ist eine radial nach innen gerichtete Rastlippe 48 vorgesehen.

Des Weiteren ist am Rückschlagklappenelement 30 eine in Umfangsrichtung umlaufende Dichtung 50 vorgesehen, die durch einen weiteren radial umlaufenden Rand gebildet ist, dessen Radius größer ist als der Radius des Halterandes 46.

Das Rückschlagklappenelement 30 weist zudem zwei Aufnahmen 52 auf, in die die Rastelemente 28 eingreifen können, sowie einen T-förmigen Vorsprung, der in die Aussparung 32 eingreifen kann.

Auf der dem Rahmen 10 abgewandten Seite, also gegenüberliegend zum Halterand 46 ist am Rückschlagklappenelement 30 des Weiteren ein abschnittsweise umlaufender Wasserabweiser 54 vorgesehen, der durch einen vorstehenden Rand gebildet ist.

Zur Montage der Entlüftungsvorrichtung 12 wird das Rückschlagklappenelement 30 vor dem Einsetzen des Rahmens 10 in die Öffnung 22 eines Fahrzeuges 24 auf den Rahmen 10 aufgelegt, wobei sich das Rückschlagklappenelement 30 über den gesamten Rahmen 10 erstreckt. Der T-förmige Vorsprung greift in die Aussparung 32 ein, und die Rastelemente 28 werden in die Aufnahmen 52 eingeführt. Dadurch ist die Orientierung des Rückschlagklappenelements 30 am Rahmen 10 festgelegt, sodass die Ausschnitte optimal über den Aussparungen 18 positioniert sind. Die Aussparung 32 und der korrespondierende Vorsprung bzw. die zusammenwirkenden Rastelemente bilden also eine Verdrehsicherung, die ein Verdrehen des Rückschlagklappenelements 30 relativ zum Rahmen 10 verhindern.

Wie in den Figuren 3c und 4 des Weiteren zu sehen ist, wird der Halterand 46 mit der Rastlippe 48 um den Steg 34 herumgelegt, sodass die Rastlippe 48 am Steg verrastet und das Rückschlagklappenelement 30 umlaufend am Rahmen 10 fixiert ist. Dies ermöglicht eine einfache und zuverlässige, insbesondere werkzeuglose, Montage des Rückschlagklappenelements 30 am Rahmen 10.

Wie in Figur 4 zu sehen ist, steht die Dichtung 50 senkrecht zur Ebene 26 des Rahmens 10 über den Halterand 46 vor. In montierter Position im Fahrzeug 24 liegt diese Dichtung 50 an der Oberfläche des Fahrzeugs 24 an und dichtet die gesamte Entlüftungsvorrichtung 12 gegen das Fahrzeug ab. Am Rahmen 10 müssen somit keine zusätzlichen Dichtungselemente vorgesehen sein. Auch eine nachträgliche Abdichtung, beispielsweise mit einem Dichtungsschaum, ist nicht erforderlich.

Wie in den Figuren 3b und c zu sehen ist, werden die Ausschnitte 42 beim Auflegen des Rückschlagklappenelements durch die schräg verlaufenden Auflageflächen 36 aus der Ebene 44 des Rückschlagklappenelements 30 herausgedrückt. Dadurch erhalten die Ausschnitte 40 eine Vorspannung, durch die diese gegen die Auflageflächen 36 gedrückt werden. Durch diese Vorspannung ist eine effektive Abdichtung der Aussparungen durch die Ausschnitte 40 sichergestellt.

Bei einem Überdruck im Fahrzeug können die Ausschnitte 40 von den Auflageflächen 36 weggedrückt werden, sodass ein Entweichen des Überdrucks aus dem Fahrzeuginnenraum möglich ist. Nach dem Zurückgehen des Überdrucks im Fahrzeuginnenraum werden die Ausschnitte 40 durch die Vorspannung zurück in die geschlossene Position bewegt, in der diese die Aussparungen 18 abdichten.

Da das Rückschlagklappenelement 30 vollständig werkzeugfrei am Rahmen 10 montiert werden kann, ist eine einfache und schnelle Montage der Entlüftungsvorrichtung 12 möglich. Da zudem die Abdichtung der Entlüftungsvorrichtung am Fahrzeug über das Rückschlagklappenelement 30 erfolgt, ist es nicht erforderlich, zusätzliche Dichtungselemente vorzusehen.

Die Form des Rahmens und des Rückschlagklappenelements kann in Abhängigkeit von äußeren Vorgaben gewählt werden. So können beispielsweise abweichend von der dargestellten runden Form auch elliptischen Formen, polygonale Formen (rechteckig, quadratisch, trapezförmig, etc.) oder andere Formen verwendet werden.

## Patentansprüche

1. Entlüftungsvorrichtung (12) für ein Fahrzeug (24), mit einem Rahmen (10) aus einem harten Kunststoff, der in einer Öffnung (22) des Fahrzeugs (24) fixiert werden kann, wobei der Rahmen (10) Aussparungen (18) aufweist, und mit einem Rückschlagklappenelement (30) aus einem flexiblen Material, insbesondere einem Kunststoff, wobei sich das Rückschlagklappenelement (30) im Wesentlichen über den gesamten Rahmen (10) erstreckt und im Bereich der Aussparungen (18) einstückig mit dem Rückschlagklappenelement (30) ausgebildete Ausschnitte (40) aufweist, die in einer geschlossenen Position flächig an um die Aussparungen (18) umlaufenden Auflageflächen (36) anliegen und in einer geöffneten Position von den Auflageflächen (36) weg bewegt werden können.

2. Entlüftungsvorrichtung nach Anspruch 1, **dadurch gekennzeichnet, dass** das Rückschlagklappenelement (30) einen umlaufenden, im Wesentlichen senkrecht von der Ebene (44) des Rückschlagklappenelements (30) in Richtung zum Rahmen (10) vorstehenden Halterand (46) aufweist, der den Rahmen (10) in Umfangsrichtung vollständig umgreift.

3. Entlüftungsvorrichtung nach Anspruch 2, **dadurch gekennzeichnet, dass** am Halterand (46) Rastelemente und/oder eine Rastlippe (48) vorgesehen sind, die am Rahmen (10) angreifen.

4. Entlüftungsvorrichtung nach Anspruch 2 oder 3, **dadurch gekennzeichnet, dass** am Rahmen (10) ein in Richtung der Ebene (26) des Rahmens (10) bzw. der Ebene (44) des Rückschlagklappenelements (30) vorstehender, insbesondere umlaufender, Steg (34) vorgesehen ist, an dem der Halterand (46) des Rückschlagklappenelements (30) angreift.

5. Entlüftungsvorrichtung nach einem der vorhergehenden Ansprüche, **dadurch gekennzeichnet, dass** am Rückschlagklappenelement (30) eine, insbesondere umlaufende, Dichtung (50) vorgesehen ist, die am Fahrzeug (24) anliegen kann.

6. Entlüftungsvorrichtung nach einem der vorhergehenden Ansprüche, **dadurch gekennzeichnet, dass** die Auflageflächen (36) in einem von Null verschiedenen Winkel (38) zur Ebene (26) des Rahmens (10) bzw. zur Ebene (44) des Rückschlagklappenelements (30) angeordnet sind.

7. Entlüftungsvorrichtung nach einem der vorhergehenden Ansprüche, **dadurch gekennzeichnet, dass** am Rahmen (10) und am Rückschlagklappenelement (30) vom Halterand (46) beabstandete zusammenwirkende Rastelemente (28, 52) vorgesehen sind.

8. Entlüftungsvorrichtung nach einem der vorhergehenden Ansprüche, **dadurch gekennzeichnet, dass** am Rahmen (10) und am Rückschlagklappenelement (30) zusammenwirkende Verdrehsicherungen vorgesehen sind.

9. Entlüftungsvorrichtung nach einem der vorhergehenden Ansprüche, **dadurch gekennzeichnet, dass** die Ausschnitte (40) aus dem Rückschlagklappenelement (30) ausgestanzt oder ausgeschnitten sind.

10. Entlüftungsvorrichtung nach einem der vorhergehenden Ansprüche, **dadurch gekennzeichnet, dass** auf der dem Rahmen (10) abgewandten Seite des Rückschlagklappenelements (30) ein zumindest abschnittsweise umlaufender Wasserabweiser (54) vorgesehen ist.
